# EUROPEAN PATENT APPLICATION

(11) **EP 2 178 296 A1**
(43) Date of publication of application: **21.04.2010**
(21) Application number: 07855910.1
(22) Date of filing: 29.12.2007
(51) Int. Cl.: H04N 5/445, H04N 7/08

(54) **AN ELECTRONIC SERVICE GUIDE LOADING METHOD FOR MOBILE TELEPHONE TELEVISION**

(30) Priority: 06.02.2007 CN 200710007556
(71) Applicant: ZTE Corporation, Shenzhen, Guangdong 518057 (CN)
(72) Inventor: CAO, Gang, Shenzhen Guangdong 518057 (CN); WANG, Zemin, Shenzhen Guangdong 518057 (CN); ZHANG, Benquan, Shenzhen Guangdong 518057 (CN)
(74) Representative: Frei Patent Attorneys
(86) International application number: PCT/CN2007/003910
(87) International publication number: WO 2008/095379

(57) **Abstract**

An electronic service guide loading method for mobile telephone televisions includes: after an electronic service guide (ESG) viewer of mobile telephone terminal is started, determining whether a change occurs when the ESG information from an existing network is compared with the ESG information from a local-storage according to the parameter information of ESG container files in FDT files; if the change occurs, retrieving the ESG container files and parsing them to the ESG information directly, completing the loading; if the change does not occur, reverting the ESG data from the local-storage to the ESG information directly, completing the loading The method dispenses a user from waiting a long time for viewing the TV program every time, ensures the real time of ESG information, and reduces the vast cost of battery power in a mobile telephone terminal, so as to considerably improve the whole capability of DVB-H mobile telephone televisions.

## Description

### TECHNICAL FIELD

The present invention relates to the field of mobile telephone televisions, especially to an Electronic Service Guide (ESG) loading method far mobile telephone televisions.

### BACKGROUND

With the advent of 3G generation, mobile telephone television related technology is increasingly becoming a research hotspot in the field of communication and electronics. In the existing mainstream standards of the mobile telephone televisions, Digital Video Broadcasting-Handheld (DVB-H) is supported by most companies with the widest coverage. DVB-H, a transmission standard, is established by European digital video broadcasting standardization association to provide multimedia services for portable/handheld terminals through terrestrial digital broadcasting network, having a broad commercial prospect. In practical application, for watching television programs through a DVB-H mobile telephone television, an Erg viewer has to be installed in a terminal, which provides information of the ESG loaded by the viewer for a terminal user. ESG comprises information of services that are accessible to a current mobile telephone television (like television channels, television programs, video file download, media playing parameters, etc.), according to the information, a user can choose favorable services to purchase. The procedure of loading ESG is usually that an ESG viewer calls a Content Delivery Protocol (CDP) module to collect an ESG startup file in current network, so as to acquire all the ESG container files that comprise ESG information and are broadcasted in the current network, by parsing the ESG startup file. CDP module then transmits these ESG container files to an ESG engine module to parse, and finally the ESG viewer can provide services to the user by querying the ESG engine module for relevant ESG information. The ESG loading process takes a long time from a mobile telephone television's receiving ESG startup file from CDP module on started to ESG engine module's completing the parsing of all ESG container files, especially when there are a large amount of 9SG container files, the system will take a longer time, usually more than 10 seconds. If a user starts the mobile telephone television ESG viewer frequently during a period of time, he/she has to wait a long time before viewing the ESG information, according to which he/she could choose a channel to play television programs, while this is intolerable to users and will bring more battery energy consumption of the terminal. A usual method to solve this problem is that, every time the ESG viewer is closed, the ESG engine module stores the ESG data applied this time in a local data file, so that the next time when the ESG viewer is started, without needing to call the CDP module, the ESG engine module can import the ESG data from the local file into the memory directly and fast for the query of the ESG viewer. But another problem is brought about at the same time, namely if the ESG information in the network changes after the ESG viewer is closed previously and before the ESG viewer is started again, if the locally stored ESG data files are still imported through the ESG engine module directly and are displayed to the user by the ESG viewer, some television channels and program information that the user views are already overdue. Especially when some ESG playing parameters change, the user cannot watch television programs normally.

So in a DVB-H mobile telephone television system, a method of uploading ESG information fast and real-timely is urgently needed, so as to increase the integral performance of DVB-H mobile telephone televisions.

### SUMMARY

The present invention aims to solve the above-mentioned technical problem by providing an Electronic Service Guide (ESG) loading method for mobile telephone televisions, so as to overcome disadvantages of conventional ERG loading method in a DVB-H mobile telephone television system, dispensing a user from waiting a long time before viewing TV programs every time, ensuring the real time of ESG information, and further increasing the integral performance of DVB-H mobile telephone televisions.

To solve the above-mentioned problem, an ESG loading method applied in mobile telephone televisions is provided in the present invention, comprising: after an ESG viewer of a mobile telephone terminal is started, determining whether a change occurs when the ESG information from a current network is compared with the ESG information from a local-storage according to the parameter information of ESG container files in File Delivery Table (FDT) files; if the change occurs, retrieving the ESG container files and parsing them into ESG information, completing the loading; if the change does not occur, reverting the ESG data from the local-storage to the ESG information directly, completing the loading.

Further, the above method may comprise: this method being divided into the following steps:
(1) when the ESG viewer is started, a Content Delivery Protocol (CDP) module and an ESG engine module are also started;
(2) the CDP module collects FDT in the current network and, according to parameter information of ESG container files in the FDT, determines whether a change occurs when the ESG information from the current network is compared with the ESG information from a local-storage; if the change occurs, step (3) is executed; otherwise, step (5) is executed;
(3) the CDP module stores information of the current FDT, collects the ESG container files and sends them to the ESG engine module;
(4) the ESG engine module parses the received ESG container files to obtain new ESG information, and stores the new information to complete the loading; and
(5) the ESG engine module reverts the ESG data file from the local-storage to the current ESG information, and the loading is completed.

Further, the above method may comprise: in step (2), the CDP module collects the ESG startup file bootstrap from IP data streams of the current network according to a fixed IP address and port number, parses the bootstrap file to obtain current IP address and port number of every FDT file and, according to the current IP address and port number of every FDT file, collects corresponding FDT file from each IP data stream.

Further, the above method may comprise: in order to determine whether a change occurs when the ESG information from the current network, is compared with the ESG information from a local-storage, comparing parameter information of the lately collected ESG container files with that of the ESG container files in the locally stored FDT file, determining whether the two comprise the same number of ESG container files, the same names and the same version number for each ESG container file, if yes, the CDP module determines that the ESG information does not change; otherwise, the ESG information changes.

Further, the above method may comprise: in step (2), if the CDP module determines that the ESG information of the current network changes compared with the locally stored ESG information, then in step (3), the CDP module further executes the following steps after storing the current FDT information:
(a) the CDP module reports to the ESG viewer a message that ESG needs updating;
(b) the ESG viewer sends to the ESG engine module a command of retrieving ESG;
(c) the ESG engine module sends to the CDP module a message of collecting all ESG container files; and
(d) the CDP module collects all ESG container files in the current network according to information in the current FDT file.

Further, the above method may comprise: step (4) specifically comprising: after receiving all the container files reported by the CDP module, the ESG engine module parses the container files in sequence, constitutes a new ESG data model and stores the new ESG data locally to complete the ESG loading.

Further, the above method may comprises: in step (2), if the CDP module determines that no change occurs to the ESG information in the current network in comparison with the locally stored ESG information, before step (5), the following steps are executed first:
(A) the CDP module reports to the ESG viewer by sending a message that ESG does not change; and
(B) the ESG viewer sends to the ESG engine module a command of loading ESG from the local ESG data file.

Further, the above method may comprise: step (5) specifically comprising: the ESG engine module imports the local ESG data file into the memory, and reverts the local ESG data file to the original ESG data model to complete loading ESG

Further, the above method may comprise: after the loading of the ESG information is completed, the ESG viewer displays the ESG information to a terminal user by querying the ESG engine module.

Further, the above method may comprise: in step (2), if the CDP module determines that no change occurs to the ESG information in the currant network in comparison with the locally stored ESG information, before step (5), the following steps are included: the CDP module sends to the ESG engine module a message that ESG information does not change; after the ESG engine module receiving the message, step (5) is executed.

In the present invention, the complicated procedure, that a CDP module has to collect all ESG container files in the current network and submit the files to ESG engine module for parsing every time the ESG viewer is opened, can be avoided, so that the user need not wait for a long time every time before viewing television programs.

### Brief Description of the Drawings

Fig.1 is a diagram illustrating the system structure related to ESG loading in DVB-H mobile telephone televisions that is referred to in embodiments of the present invention;
Fig. 2 is a general flowchart illustrating an embodiment of the method of ESG loading of the present invention; and
Fig. 3 is a general flowchart illustrating another embodiment of the method of ESG loading of the present invention.

### DETAILED DESCRIPTION

The technical scheme of the present invention will be illustrated in further detail with reference to the drawings and embodiments hereinafter.

A core idea of the ESG loading method in DVB-H mobile telephone televisions is that, when an ESG viewer is started, the bottom CDP module determines whether any change occurs to the ESG information in the current network in comparison with the original locally stored ESG information according to the ESG container information in FDT file, so that an ESG engine module can determine whether to retrieve the ESG information or to directly import the previously stored ESG data.

The present invention will be illustrated in detail with reference to the accompanying drawings and embodiments hereinafter.

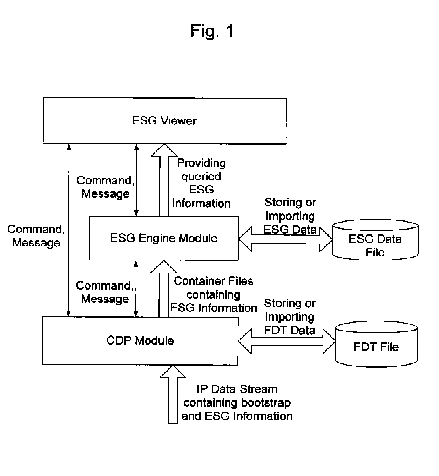

As shown in Fig. 1, the system relating to ESG loading in DVB-H mobile telephone televisions comprises: an ESG viewer, a CDP module and an ESG engine module. The ESG viewer is used for calling the CDP module and the ESG engine module, receiving the ESG information sent by the ESG engine module and displaying the ESG information to the user; the CDP module is used for collecting ESG startup file bootstrap and IP data stream of ESG information, wherein, the IP data stream of the ESG information comprises FDT file data and ESG container file data; after the ESG viewer is started, the CDP module collects the ESG startup file bootstrap and a FDT file in the current network and, according to the ESG container information in the collected FDT file, determines whether any change occurs to the ESG information in the current network in comparison with the original locally stored ESG information, if yes, the CDP module collects ESG container files and sends them to the ESG engine module; the ESG engine module communicates with the ESG viewer and the CDP module, if no change occurs to the ESG information in the current network in comparison with the original locally stored ESG information, ESG engine module directly imports the stored ESG data file and sending the file into the ESG viewer; while, if any change occurs, the ESG engine module receives the ESG container file sent by the CDP module, parsing the file and sending it to the ESG viewer.

### Embodiment 1:

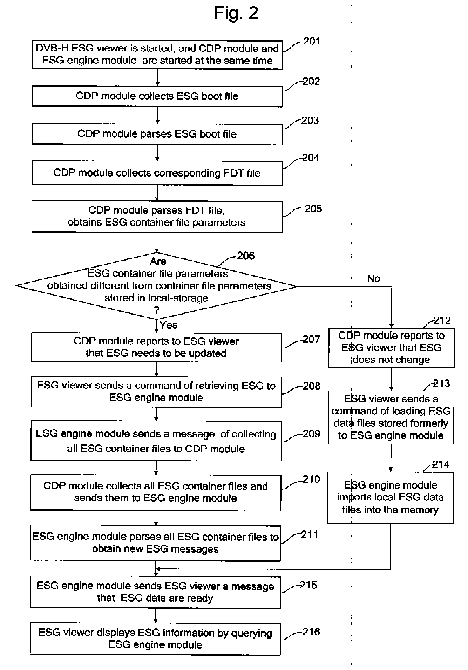

As shown in Fig. 2, an embodiment of the method of ESG loading of the present invention is as follows:
step 201, when an ESG viewer of a mobile telephone television is started, a CDP module and an ESG engine module are also started at the same time;
step 202, after being started, the CDP module collects an ESG startup file bootstrap from IP data stream of the current network according to the fixed IP address and port number in DVB-H protocol;
step 203, the CDP module parses the bootstrap file to obtain parameters of IP data streams where every FDT files are located currently-IP addresses and port numbers;
step 204, the CDP module collects the corresponding FDT file from each IP data stream according to the above obtained IP addresses and port numbers;
step 205, the CDP module parses the FDT files to obtain parameters of every ESG container file - container file name and container version number;
step 206, the CDP module compares the newly obtained container file names and container version numbers with those of the previously local stored FDT files, and determines whether parameters of the newly collected ESG container files are the same as those of ESG container files stored locally. If it is found that the version number of certain ESG container file changes or ESG container files are added or deleted (namely the new container file names are different from those locally stored, or the numbers are different), the CDP module will store information of the current FDT files locally, and then step 207 is executed; otherwise, step 212 is executed;
step 207, the CDP module reports to the ESG viewer a message that ESG needs updating, and the message is identified as MSG_CDP_DVB_ESGUPDATE;
step 208, the ESG viewer receives the message MSG_CDP_DVB_ESGUPDATE, and sends a command of retrieving ESG to the ESG engine module, and the command is identified as CMD_DVB_ESG_GETESG;
step 209, after receiving the command CMD_DVB_ESG_GETESG, the ESG engine module sends a message of collecting all ESG container files to the CDP module, while the message is identified as MSG_ESG_CDP_GETESGCONTAINER;
step 210, after receiving the message MSG_ESG_CDP_GETESGCONTAINER, the CDP module collects all the ESG container files in the current network according to information of the present FDT and sends the files to the ESG engine module;
step 211, the ESG engine module receives all the container files reported by the CDP module, parses the files in sequence to construct a new ESG data model, and stores the new ESG data locally, and then step 215 is executed;
step 212, the CDP module reports to the ESG viewer a message that ESG does not change, and the message is identified as MSG_CDP DVB_ESGUPNODATE;
step 213, the ESG viewer receives the message MSG_CDP_DVB_ESGUPNODATE, and sends to the ESG engine module a command of loading ESG from the local ESG data file, and the command is identified as CMD_DVB_ESG_LOADESGFROMLOCAL;
step 214, the ESG engine module receives the command CMD_DVB_ESG_LOADESGFROMLOCAL. imports the local ESG data file into the memory, and reverts the local ESG data file to the original ESG data model (if ESG data is stored in the memory, it is called ESG data model; if ESG data is stored in the disk, it is called ESG data file);
step 215, the ESG engine module sends to ESG viewer a message that ESG data are ready, and the message is identified as MSG_ESG_DVB_ESGREADY; and
step 216, after receiving the message MSG_ESG_DVB_ESGREADY the ESG viewer can display the ESG information to a terminal user by querying ESG engine module.

### Embodiment 2:

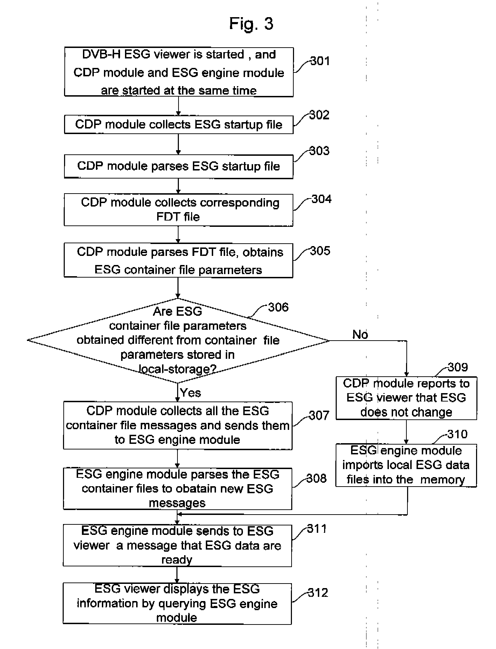

ESG loading can also be implemented through the following steps, as shown in Fig. 3, including:
step 301, when an ESG viewer of a mobile telephone television is started, a CDP module and an ESG engine module are also started at the same time;
step 302, after being started, the CDP module collects an ESG startup file bootstrap from IP data stream of the current network according to the fixed IP address and port number in DVB-H protocol;
step 303, the CDP module parses the bootstrap file to obtain parameters of IP data streams where corresponding FDT files are located currently - IP addresses and port numbers;
step 304, the CDP module collects the corresponding FDT files from every IP data stream according to the above obtained IP addresses and port numbers;
step 305, the CDP module parses the FDT files to obtain parameters of every ESG container file - container file name and container version number;
step 306, the CDP module compares the newly obtained container file names and container version numbers with those of the previously focal stored FDT files, and determines whether parameters of the newly collected ESG contained files are the same as those of ESG container stored locally. If it is found that the version number of certain ESG container file changes or ESG container files are added or deleted (namely the new container file names are different from those locally stored, or the numbers thereof are different), the CDP module will store the information of the current FDT files locally, and then step 307 is executed; otherwise, step 309 is executed;
step 307, the CDP module collects all ESG container files in the current network and sends them to the ESG engine module according to information in the current FDT files;
step 308, the ESG engine module receives all the ESG container files reported by the CDP module, parses them in sequence to construct a new ESG data model, and stores the new ESG data locally, and then step 311 is executed,
step 309, the CDP module reports to the ESG engine module a message that ESG does not change;
step 310, after receiving this message, the ESG engine module imports the local ESG data file into the memory, and reverts the local ESG data file to the original ESG data model;
step 311, the ESG engine module sends to the ESG viewer a message that ESG data are ready; and
step 312, after receiving the above-mentioned message, the ESG viewer can display ESG information to the terminal user by querying the ESG engine module.

### INDUSTRIAL APPLICABILITY

In the present invention, when an ESG viewer is started, it is determined whether a change occurs when the ESG information from the current network is compared with the ESG information from a local-storage according to the parameter information of ESG container files in FDT files, so as to determine whether to retrieve ESG information or import the previously stored ESG data directly. Such an operation can avoid the complicated procedure that, every time an ESG viewer is started, a CDP module has to collect all ESG container files in the current network and submit the files to an ESG engine module for parsing, and thus the users need not wait for a long time before they get to view television programs, and real-time quality of ESG information is guaranteed while a great deal of battery power consume by mobile phone terminals are saved, accordingly, the integral performance of DVB-H mobile telephone televisions is considerably improved.

## Claims

1. An Electronic Service Guide (ESG) loading method for mobile telephone televisions, comprising:
after an ESG viewer of a mobile telephone terminal is started, determining whether a change occurs when ESG information from the current network is compared with the ESG information from a local-storage according to the parameter information of ESG container files in File Delivery Table (FOT) files; if the change occurs, retrieving the ESG container files and parsing the files to the ESG information, completing the loading; if the change does not occur, reverting the ESG data from the local-storage to the ESG information directly, completing the loading.

2. The method according to claim 1, wherein, the method comprises the following steps:
(1) when the ESG viewer is started, a Content Delivery Protocol (CDP) module and an ESG engine module are started as well;
(2) the CDP module collects FDT in the current network and, according to parameter information of ESG container files in the FDT, determines whether a change occurs to the ESG information in the current network compared with that stored locally; if the change occurs, step (3) is executed; otherwise, step (5) is executed;
(3) the CDP module stores information of the current FDT, collects the ESG container files and sends the files to the ESG engine module;
(4) the ESG engine module parses the received ESG container files to obtain new ESG information, and stores the new information to complete the loading; and
(5) the ESG engine module reverts the local stored ESG data file to the current ESG information, and the loading is completed.

3. The method according to claim 2, wherein,
in step (2), the CDP module collects the ESG startup file bootstrap from IP data streams of the current network according to the fixed IP address and port number first, parses the bootstrap file to obtain the current IP address and port number of every FDT file and, according to the current IP address and port number of every FDT file, collects the corresponding FDT file from each IP data stream.

4. The method according to claim 1 or claim 2, wherein,
in order to determine whether a change occurs when the ERG information from the current network is compared with the ESG information from a local-storage, comparing parameter information of the lately collected ESG container files with that of the ESG container files in the locally stored FDT file, determining whether the two comprise the same number of ESG container files, the same names and the same version number for each ESG container file; if yes, the CDP module determines that the ESG information does not change; otherwise, the CDP module determines that the ESG information changes.

5. The method according to claim 2, wherein,
in step (2), if the CDP module determines that the ESG information, of the current network changes compared with the locally stored ESG information, then in step (3), the CDP module further executes the following steps after storming the current FDT information:
(a) the CDP module reporting to the ESG viewer a message that ESG needs updating;
(b) the ESG viewer sending to the ESG engine module a command of retrieving ESG ;
(c) the ESG engine module sending to the CDP module a message of collecting all ESG container files;
(d) the CDP module collecting all ESG container files in the current network according to information in the current FDT file.

6. The method according to claim 2, wherein, step (4) specifically comprises:
after receiving all the container files reported by the CDP module, the ESG engine module parsing the container files in sequence, constructing a new ESG data model and storing the new ESG data locally to complete the ESG loading.

7. The method according to claim 2, wherein,
in step (2), if the CDP module determines that no change occurs to the ESG information in the current network in comparison with the locally stored ESG information, then before step (5), the following steps is executed first:
(A) the CDP module reporting to the ESG viewer a message that ESG information does not change;
(B) the ESG viewer sending to the ESG engine module a command of loading ESG from the local ESG data file.

8. The method according to claim 2 or claim 7, wherein, step (5) specifically comprises:
the ESG engine module importing the local ESG data file into the memory, and reverting the local ESG data file to the original ESG data model to complete loading ESG.

9. The method according to claim 1 or claim 2, wherein,
after the loading of ESG information is completed, the ESG viewer displays the ESG information to a terminal user by querying the ESG engine module.

10. The method according to claim 2, wherein,
in step (2), if the CDP module determines that no change occurs to the ESG information in the current network in comparison with the locally stored ESG information, then before step (5), the following steps is further included: the CDP module sending to the ESG engine module a message that ESG information does not change; after the ESG engine module receives the above message, step (5) being executed.
